# EUROPÄISCHE PATENTANMELDUNG

(11) **EP 4 840 569 A1**
(43) Veröffentlichungstag der Anmeldung: **18.11.2026**
(21) Anmeldenummer: 26176147.2
(22) Anmeldetag: 04.05.2026
(51) Int. Cl.: B23G 5/18, B23G 5/00

(54) **GEWINDEFRÄSER**

(30) Priorität: 16.05.2025 DE 102025119036
(71) Anmelder: Gühring KG, 72458 Albstadt (DE)
(72) Erfinder: Käppeler, Tim, 72511 Bingen (DE); Necetin, Emin, 72488 Sigmaringen (DE)
(74) Vertreter: Winter, Brandl - Partnerschaft mbB

(57) **Zusammenfassung**

Es ist ein Gewindefräser (1; 100; 200) mit einem Schaft (2) und einem Schneidteil (4) bereitgestellt, der mehrere in Umfangsrichtung durch Spannuten (6) voneinander getrennte Schneidstege (8) mit jeweils einer Vielzahl von Schneidzähnen (10) aufweist. Wenigstens ein Schneidsteg (8) weist wenigstens eine entlang des Schneidstegs (8) verlaufende Nut (14) auf, die die Schneidzähne (10) in Zahnabschnitte (16, 18, 20, 22) unterteilt.

## Beschreibung

Die Erfindung betrifft einen Gewindefräser mit einem Schaft und einem Schneidteil, der mehrere in Umfangsrichtung durch Spannuten voneinander getrennte Schneidstege mit jeweils einer Vielzahl von Schneidzähnen aufweist.

Gewindefräsen ist im Hinblick auf Prozesssicherheit und Gewindequalität das führende Verfahren zur Gewindeherstellung. Das Gewindefräsen ist zur Herstellung von Innen- und Außengewinden geeignet und ist von weichen bis hin zu hochfesten Werkstoffen einsetzbar. Das Gewinde entsteht durch ein spiralförmiges Schrägeintauchen des rotierenden Gewindefräsers. Dabei erzeugt die Seitenbewegung des Gewindefräsers in einer Umdrehung die Steigung des Gewindes. Voraussetzung dafür ist eine CNC-Maschine mit mindestens drei Achsen, bei der die Bewegung entlang der X- und Y-Achse den Durchmesser des zu erzeugenden Gewindes bestimmen, während die Bewegung entlang der Z-Achse die Steigung des Gewindes definiert.

Gewindefräser zum Gewindefräsen sind aus dem Stand der Technik in vielerlei Hinsicht bekannt. Sie weisen üblicherweise einen Schaft zum Einspannen in eine Werkzeugmaschine sowie einen Schneidteil auf. Der Schneidteil weist durch geradlinig oder wendelförmig verlaufende Spannuten getrennte Schneidstollen oder Schneidstege mit einer Vielzahl von axial hintereinander angeordneten Schneidzähnen zur Erzeugung des Gewindes auf.

Das in der Druckschrift EP 1 314 506 B1 gezeigte als Gewindefräser einsetzbare Geschwindeschneidwerkzeug hat einen zylindrischen Schaft und einen Schneidenteil mit mehreren durch geradlinig verlaufende Spannuten voneinander getrennte Schneidstollen. Die Schneidstollen weisen eine Vielzahl von spiralig angeordneten Schneidzähnen auf, die in Drehrichtung des Werkzeugs vorauslaufende Schneidkanten und einen den Schneidkanten nachlaufenden Rücken aufweisen. Die Schneidzähne weisen jeweils eine Freifläche auf. Mindestens ein Teil der Schneidzähne weist auf den Freiflächen hinter den jeweiligen Schneidkanten eine Hinterschneidung auf, die den Verschleiß des Werkzeugs vermindern und höhere Standzeiten des Werkzeugs ermöglichen sollen, da die Schneidkanten der Schneidzähne auch nach längerem Gebrauch weniger Beschädigungen und weniger Ausbrüche aufweisen.

Ein weiterer gattungsgemäßer Gewindefräser ist aus der Druckschrift WO 2009/037094 A1 bekannt. Der Gewindefräser hat einen Schaft und einen Schneidteil mit drei durch Spannuten voneinander getrennten Schneidstollen mit jeweils mehreren axial hintereinander angeordneten Schneidzähnen, wobei analoge Schneidzähne verschiedener Schneidstollen jeweils dieselbe axiale Position haben. Die Spannuten sowie die Schneidstollen sind gegenüber der Drehachse des Gewindefräsers leicht angestellt. Wenigstens der Schneidteil des Gewindefräsers besteht aus einem spezifischen Vollhartmetall, um insbesondere bei der Bearbeitung von sehr harten Werkstoffen und sehr kleinen Gewindedurchmessern dir Verschleißfestigkeit verbessert und die Bruchanfälligkeit herabsetzt.

Bei Gewindefräsern der vorgenannten Art können durch die beim Bearbeitungsprozess auftretenden Kräfte in Kombination mit den Eigenfrequenzen des Werkzeugs zu Vibrationen und hohen Belastungen der Schneidzähne bzw. des Werkzeugs führen. Die prozessbedingten Vibrationen können zwischen dem Werkstück und dem Gewindefräser auftreten und werden auch als Rattern bezeichnet. Vibrationen können nicht nur einen negativen Einfluss auf die Lebensdauer des Gewindefräsers, sondern auch auf die Qualität des zu erzeugenden Gewindes haben. Das Auftreten von Vibrationen beim Bearbeitungsprozess hängt unter anderem von der Wahl der Spanungsgrößen wie Spanungsdicke, Spanungsbreite und Schnittgeschwindigkeit ab. Auch eine unsachgemäße Schmierung kann die Reibung zwischen dem Werkstück und dem Gewindefräser erhöhen und zu unerwünschten Vibrationen führen.

In Bezug auf die Struktur von Gewindefräsern ist es zur Verminderung von Vibrationen bekannt, die Schneidstollen mit einer ungleichen Teilung um die Werkzeugdrehachse auszubilden. Es besteht jedoch weiterer Bedarf, Gewindefräser zu entwickeln, die beim Gewindefräsprozess Vibrationen vermeiden bzw. verhindern und somit eine höhere Lebensdauer aufweisen.

Ausgehend von dem aus der EP 1 314 506 B1 bekannten Gewindefräser liegt der Erfindung nun die Aufgabe zugrunde, einen Gewindefräser bereitzustellen, bei dem während des Gewindeherstellungsprozesses Vibrationen vermindert bzw. verhindert werden können und die Standzeit erhöht werden.

Diese Aufgabe wird beispielsweise durch einen Gewindefräser gemäß Anspruch 1 gelöst. Die Unteransprüche betreffen vorteilhafte Ausgestaltungen.

Ein Gewindefräser weist einen Schaft und einen Schneidteil auf, der mehrere in Umfangsrichtung durch Spannuten voneinander getrennte Schneidstollen bzw. Schneidstege mit jeweils einer Vielzahl von Schneidzähnen aufweist. Wenigstens ein Schneidsteg kann wenigstens eine entlang des Schneidstegs verlaufende Nut aufweisen, die die Schneidzähne in Zahnabschnitte unterteilt.

Der Gewindefräser kann einen insbesondere zylindrischen Schaft zum Einspannen in eine Werkzeugmaschine aufweisen. Der axial an den Schaft anschließende Schneidteil weist mehrere Spannuten auf, die geradlinig entlang der Werkzeugdrehachse verlaufen können oder gegenüber der Werkzeugdrehachse angestellt, d.h. spiralisiert, verlaufen, d.h. einen Drallwinkel aufweisen, können. Die in Umfangsrichtung zwischen den Spannuten liegenden Schneidstege, die auch als Schneidstollen bezeichnet werden können, weisen jeweils eine Vielzahl von axial hintereinanderliegenden Schneidzähnen auf.

Die mehreren Schneidzähne jedes Schneidstegs sind in axialer Richtung durch Stegnuten bzw. Zahnlücken voneinander getrennt. Jeder Schneidzahn kann in Drehrichtung des Gewindefräsers vorauslaufend zwei vorzugweise identische, Zahnflankenkanten bildende Nebenschneiden aufweisen, die unter einem vorzugsweise spitzen Winkel zueinander ausgerichtet sind, und vorzugsweise über eine die Spitze bzw. den Zahnkopf des Schneidzahns bildende Hauptschneide, die einen Radius bilden kann, miteinander verbunden sind. Die Nebenschneiden schneiden die Gewindeflanken des Gewindes und die Hauptschneide schneidet den Gewindegrund und die an den Gewindegrund angrenzenden Bereiche. Die Ausrichtung der Nebenschneiden sowie der Verlauf der Hauptschneide können somit an die gewünschte Gewindeform des mit dem Gewindefräser herzustellenden Gewindes angepasst sein. Jeder Schneidzahn kann auf seinem Zahnrücken im Bereich hinter der Hauptschneide eine Freifläche aufweisen, die einen Freiwinkel zu der von der Hauptschneide erzeugten Schnittfläche hat. Mit anderen Worten kann die Höhe jedes Schneidzahns entgegen der Umfangs-/Drehrichtung des Gewindefräsers abnehmen.

Wenigstens ein Schneidsteg kann wenigstens eine entlang des Schneidstegs verlaufende Nut aufweisen, die die Schneidzähne in Umfangs-/Drehrichtung voneinander beabstandete Zahnabschnitte unterteilt. Für den Fall, dass genau eine Nut vorhanden ist, kann die Nut in Umfangsrichtung des Gewindefräsers mittig oder außermittig liegen. Bei einer oder mehreren Nuten kann jede Nut vorzugsweise parallel zu der vor dem Schneidsteg liegenden Spannut verlaufen. Des Weiteren kann sich jede Nut über die gesamte Länge des Schneidstegs erstrecken.

Die entlang des Schneidstegs verlaufende Nut unterbricht den Verlauf des Zahnrückens bzw. der auf dem Zahnrücken vorhandenen Freifläche und vergrößert den Abstand des Zahnrückens bzw. der Freifläche von der von der Hauptschneide erzeugten Schnittfläche im Werkstück. Insbesondere bei sehr kleinen Freiwinkeln kann die Nut eine starke Reibung zwischen dem Zahnrücken und dem Werkstück, insbesondere dem von der Hauptschneide bearbeiteten Bereich des Werkstücks, vermindern und dadurch Vibrationen oder Schwingungen des Gewindefräsers verringern. Die Nut verbessert des Weiteren eine Verteilung von Kühlschmiermittel entlang des Schneidstegs, so dass insgesamt die Schmierung verbessert wird, wodurch Vibrationen vermindert und die Laufruhe des Gewindefräsers erhöht werden kann. Des Weiteren kann zwischen der Nut und der von der Hauptschneide bearbeiteten Fläche ein Kühlschmiermittelpolster gebildet werden, das dazu beitragen kann, Vibrationen des Gewindefräsers zu verringern. Insgesamt ist der Gewindefräser durch die Nut langlebiger und weist eine höhere Standzeit auf.

Der wenigstens eine Schneidsteg kann mehrere zueinander parallel verlaufende Nuten aufweisen.

Durch die Ausbildung von mehreren Nuten auf dem wenigstens einen Schneidsteg kann der Effekt der Reduzierung von Vibrationen oder Schwingungen weiter verstärkt werden. Die mehreren parallel verlaufenden Nuten lassen sich einfach, z.B. mittels eines Schleifverfahrens und einer Schleifscheibe, auf dem wenigstens einen Schneidsteg ausbilden.

Die Zahnabschnitte jedes Schneidzahns können, in Umfangsrichtung gemessen, gleiche Breiten aufweisen.

Wenn die Zahnabschnitte jedes Schneidzahns in Umfangsrichtung, insbesondere entlang des Zahnrückens, gemessen gleiche Breiten aufweisen sind die Nuten gleichmäßig verteilt, wodurch Kühlschmiermittel gleichmäßig über die gesamte in Umfangsrichtung gemessene Breite des Schneidzahns verteilt werden kann. Es ergibt sich eine optimale Schmierung, wodurch Vibrationen vermindert und die Laufruhe des Gewindefräsers erhöht werden kann. Des Weiteren können sich zwischen den Nuten und der von der Hauptschneide bearbeiteten Fläche ein oder mehrere Kühlschmiermittelpolster bilden, die der Entstehung von Vibrationen entgegenwirken können.

Alternativ dazu können die Zahnabschnitte jedes Schneidzahns, in Umfangsrichtung gemessen, aber auch unterschiedliche Breiten aufweisen.

Durch die in Umfangsrichtung, insbesondere entlang des Zahnrückens, gemessenen unterschiedlichen Breiten der Zahnabschnitte weist der Schneidzahn eine unregelmäßige Teilung auf. Diese unregelmäßige Teilung bewirkt, in ähnlicher Weise wie die aus dem Stand der Technik bekannte in Umfangsrichtung des Gewindefräsers unregelmäßige Teilung der Schneidstollen bzw. Schneidstege, eine Verminderung des Auftretens von Vibrationen. Insgesamt kann die Stabilität der Schneidzähne und die Standzeit des Gewindefräsers erhöht werden.

Unabhängig davon, ob die Zahnabschnitte jedes Schneidzahns, in Umfangsrichtung, insbesondere entlang des Zahnrückens, gemessen, gleiche oder unterschiedliche Breiten aufweisen, kann der wenigstens eine Schneidsteg mit der wenigstens einen entlang des Schneidstegs verlaufenden Nut eine in Umfangsrichtung gemessene Breite aufweisen, die größer ist als die in Umfangsrichtung gemessenen Breiten der Schneidstege ohne Nut. Vorzugsweise ist im Sinne einer Reduzierung von Vibrationen und Schwingungen des Gewindefräsers die in Umfangsrichtung gemessene Breite des Schneidstegs mit der wenigstens einen Nut um den Betrag der in Umfangsrichtung gemessenen Nutbreite (für den Fall, dass der Schneidsteg genau eine Nut aufweist) oder den Summenbetrag der in Umfangsrichtung gemessenen Nutbreiten (für den Fall, dass der Schneidsteg mehrere Nuten aufweist) größer als die in Umfangsrichtung gemessene Breite eines Schneidstegs ohne Nut.

Alternativ dazu können die in Umfangsrichtung gemessenen Breiten aller Schneidstege gleich groß sein.

Die wenigstens eine Nut kann eine radiale Tiefe haben, die maximal 10 % der Tiefe einer Spannut beträgt.

Über die Spannut werden die von der Hauptschneide und den Nebenschneiden der Schneidzähne abgetragenen Späne abgeführt. Eine radiale Tiefe der Nut von maximal 10 % der Tiefe einer Spannut kann vermeiden, dass sich Späne in der Nut verklemmen und so den Gewindefräsprozess, beispielsweise durch eine verschlechterte Kühlschmiermittelverteilung, beeinträchtigen oder durch in der Nut verklemmte Späne die Oberflächenqualität des erzeugten Gewindes vermindert wird.

Die wenigstens eine Nut kann eine radiale Tiefe haben, die maximal 10 % der Höhe eines Schneidzahns beträgt.

Bei einer radialen Tiefe der wenigstens einen Nut, die maximal 10 % der Höhe eines Schneidzahns beträgt, wird die Stabilität des Schneidzahns nicht beeinträchtigt. Gleichzeitig ist die Tiefe der wenigstens einen Nut groß genug, Vibrationen und Schwingungen des Gewindefräsers zu vermindern bzw. vermeiden und die Standzeit des Gewindefräsers zu erhöhen. Die Schneidzahnhöhe kann die von einer Stegnut bis zu einem Scheitelpunkt der Hauptschneide des Schneidzahns senkrecht gemessene Länge sein.

Die wenigstens eine Nut kann einen halbrunden Querschnitt haben.

Wenn Späne oder Spanteile in den Bereich des Zahnrückens des Schneidzahns gelangen, kann der halbrunde Querschnitt der wenigstens einen Nut dabei helfen, ein Verklemmen der Späne oder Spanteile zu verhindern und ein Herausspülen durch Kühlschmiermittel erleichtern.

Die wenigstens eine Nut kann axial auf gleicher Höhe mit den Spannuten auslaufen.

Auf diese Weise kann sichergestellt werden, dass alle Schneidzähne eines Schneidstegs durch wenigstens eine Nut in Dreh- bzw. Umfangsrichtung in Zahnabschnitte unterteilt sind. Des Weiteren kann die Herstellung des Gewindefräsers vereinfacht werden.

Die Schneidstege können mit ungleicher Winkelteilung um die Gewindefräserachse angeordnet sein.

Es ist ausreichend, wenn die Schneidstege an wenigstens einer Position entlang des Schneidteils mit ungleicher Winkelteilung um die Gewindefräserachse angeordnet sind. Insbesondere können die Schneidstege an einem vom Schaft abgewandten vorderen Ende des Schneidteils eine ungleiche Winkelteilung, d.h. ungleichen Winkelabstände zwischen den Schneidstegen, aufweisen. Alternativ dazu kann die ungleiche Winkelteilung der Schneidstege an einem schaftseitigen hinteren Ende oder an einer Position innerhalb des Schneidteils, beispielsweise in der Längenmitte des Schneidteils, vorhanden sein. Es ist auch möglich, dass die Schneidstege an mehreren Positionen entlang des Schneidteils oder über einen axialen Längenabschnitt entlang des Schneidteils mit ungleicher Winkelteilung um die Gewindefräserachse angeordnet sind.

Eine ungleiche Winkelteilung der Schneidstege kann dadurch erreicht werden, dass der Teilungswinkel zwischen zwei in Umfangsrichtung benachbarten Schneidstegen sich vom Teilungswinkel zwischen zwei weiteren in Umfangsrichtung benachbarten Schneidstegen voneinander unterscheidet. Als Teilungswinkel wird der Winkel zwischen einem in Umfangsdrehrichtung vorauslaufenden Ende eines ersten Schneidstegs und einem in Umfangsdrehrichtung vorauslaufenden Ende eines zum ersten Schneidsteg benachbarten zweiten Schneidstegs verstanden. Die ungleiche Winkelteilung kann ein Entstehen von Vibrationen oder Schwingungen wirksam reduzieren, was zusätzlich zu einem stabileren Gewindefräsprozess führt und zu einer qualitativ hochwertigen Gewindeoberfläche beiträgt.

Der Schneidteil kann geradegenutet ausgebildet sein, wobei die Schneidstege einen Spiral- bzw. Drallwinkel von 0° aufweisen, wodurch sich die Herstellung des Schneidteils vereinfacht.

Alternativ dazu kann der Schneidteil wendel- bzw. spiralgenutet ausgebildet sein, wobei die Schneidstege einen Spiral- bzw. Drallwinkel von größer als 0° aufweisen. Folglich können sich die Schneidstege um die Werkzeugdrehachse des Gewindefräsers herum winden.

In letzterem Fall kann die oben erwähnte ungleiche Winkelteilung der Schneidstege auch dadurch erreicht werden, dass die Schneidstege ungleiche Spiral- bzw. Drallwinkel aufweisen.

Wenn ein Schneidsteg über die gesamte axiale Länge des Schneidteils eine in Umfangsrichtung gemessene gleichbleibende Breite aufweist, entspricht der Drallwinkel der dem Schneidsteg vorauslaufenden Spannut sowie der Drallwinkel der dem Schneidsteg nachlaufenden Spannut einem Drallwinkel des zwischen den Spannuten liegenden Schneidstegs. Insbesondere können bei einem rechtsdrehenden Gewindefräser die Spannuten einen positiven Drallwinkel (in einer Stirnansicht des Gewindefräsers winden sich die Spannuten im Uhrzeigersinn um die Werkzeugdrehachse) aufweisen, so dass beim Gewindefräsprozess anfallenden Späne in Richtung des Schafts gefördert werden. Analog dazu können bei einem linksdrehenden Gewindefräser die Spannuten einen negativen Drallwinkel (in einer Stirnansicht des Gewindefräsers winden sich die Spannuten im Gegenuhrzeigersinn um die Werkzeugdrehachse) aufweisen, so dass beim Gewindefräsprozess anfallenden Späne in Richtung des Schafts gefördert werden.

Beispielsweise können die Schneidstege an einem dem Schaft abgewandten vorderen Ende des Schneidteils eine ungleiche Winkelteilung aufweisen, wobei alle Spannuten bzw. alle Schneidstege einen gleichen Drallwinkel von größer als 0° aufweisen. Dadurch wird über die gesamte axiale Länge des Schneidteils eine ungleiche Winkelteilung der Schneidstege um die Gewindefräserachse erreicht.

Die Drallwinkel von wenigstens zwei Spannuten können sich unterscheiden.

Insbesondere kann sich der Drallwinkel des Schneidstegs mit der wenigstens einen entlang des Schneidstegs verlaufenden Nut von dem Drallwinkel eines weiteren Schneidstegs unterscheiden.

Wenn sich die Drallwinkel von wenigstens zwei Schneidstegen unterscheiden, kann erreicht werden, dass die Schneidstege zumindest an einer Position entlang des Schneidteils oder zumindest in einem axialen Längenbereich innerhalb des Schneidteils, beispielsweise in der Längenmitte des Schneidteils, mit ungleicher Winkelteilung um die Gewindefräserachse angeordnet sind.

Die Formulierung "wenigstens ein Schneidsteg weist wenigstens eine entlang des Schneidstegs verlaufende Nut auf" schließt mit ein, dass genau ein Schneidsteg wenigstens eine entlang des Schneidstegs verlaufende Nut aufweist, die die Schneidzähne des Schneidstegs in Zahnabschnitte unterteilt und dass mehrere Schneidstege oder alle Schneidstege wenigstens eine entlang der jeweiligen Schneidstege verlaufende Nut aufweisen, die die Schneidzähne der jeweiligen Schneidstege in Zahnabschnitte unterteilt.

Wenn jeder Schneidsteg wenigstens eine entlang des Schneidstegs verlaufende Nut aufweist, die die Schneidzähne in Zahnabschnitte unterteilt, lassen sich Vibrationen und Schwingungen des Gewindefräsers besonders gut vermeiden. Des Weiteren wird die Verteilung von Kühlschmiermittel um den gesamten Umfang des Gewindefräsers verbessert.

Der Gewindefräser kann einen, vorzugsweise auf der Werkzeugdrehachse verlaufenden, innenliegenden Kühlschmiermittelkanal aufweisen.

Durch den innenliegenden Kühlschmiermittelkanal kann Kühlschmiermittel auf einfache Weise an das dem Schaft abgewandte stirnseitige vordere Ende des Gewindefräseres und die an diesem Ende des Gewindefräsers liegenden Schneidzähne transportiert werden. Über die entlang des wenigstens einen Schneidstegs verlaufende wenigstens eine Nut kann das Kühlschmiermittel dann an alle Schneidzähne des Schneidstegs geführt werden, so dass eine gute Schmierung und Kühlung des Gewindefräsers erreicht wird. Alternativ zu dem innenliegenden Kühlschmiermittelkanal ist auch eine Versorgung mit Kühlschmiermittel von einer Außenumfangsseite des Gewindefräsers her möglich.

Weitere Einzelheiten, Merkmale und Vorteile ergeben sich aus der nachfolgenden Beschreibung von Ausführungsformen und anhand der Zeichnungen. Es zeigen:
Fig. 1a ein Gewindefräser gemäß einer Ausführungsform in einer Seitenansicht;
Fig. 1b eine Stirnansicht des Gewindefräsers aus Fig. 1a;
Fig. 1c eine Detailansicht des Bereichs A aus Fig. 1b;
Fig. 2a ein Gewindefräser gemäß einer zweiten Ausführungsform in einer Seitenansicht;
Fig. 2b eine Stirnansicht des Gewindefräsers aus Fig. 2a;
Fig. 2c eine Detailansicht des Bereichs A aus Fig. 2b;
Fig. 3a ein Gewindefräser gemäß einer dritten Ausführungsform in einer Seitenansicht;
Fig. 3b eine Stirnansicht des Gewindefräsers aus Fig. 3a; und
Fig. 3c eine Detailansicht des Bereichs A aus Fig. 3b.

### Erste Ausführungsform

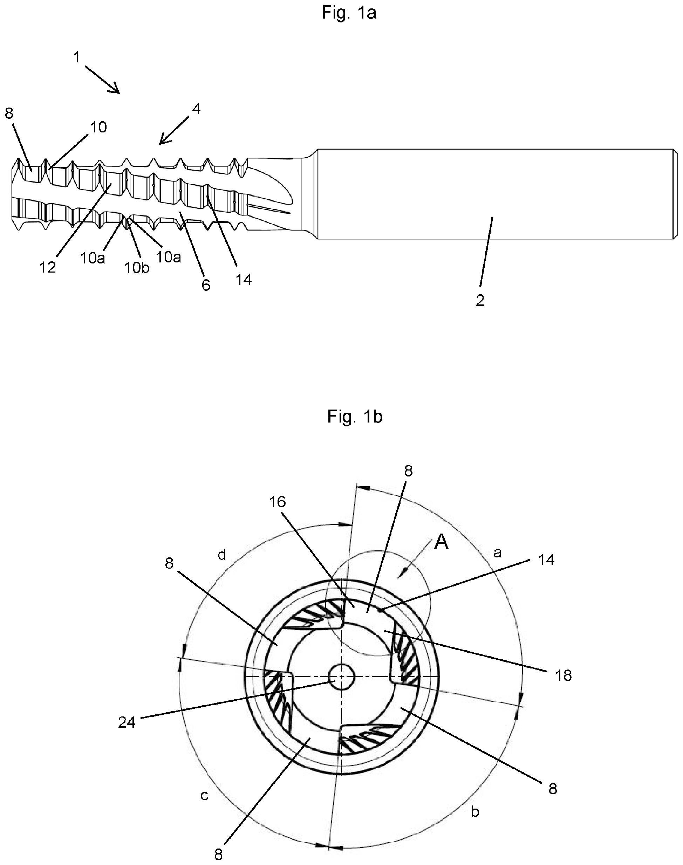

Fig. 1a zeigt einen rechtdrehenden Gewindefräser 1 mit einem zylindrischen Schaft 2 zum Einspannen in eine Werkzeugmaschine und einem Schneidteil 4. Wie in Fig. 1b gezeigt, weist der Schneidteil 4 vier in Umfangsrichtung durch Spannuten 6 voneinander getrennte Schneidstege 8 auf. Wie in Fig. 1b anhand der Teilungswinkel a, b, c, d dargestellt, sind die die Schneidstege 8 mit ungleicher Winkelteilung um die Gewindefräserachse angeordnet.

Jeder Schneidsteg 8 weist eine Vielzahl von axial hintereinanderliegenden Schneidzähnen 10 auf, die durch Stegnuten 12 voneinander getrennt sind. Jeder Schneidzahn 10 weist in Drehrichtung des Gewindefräsers 1 vorauslaufend zwei Nebenschneiden 10a auf, die unter einem spitzen Winkel zueinander ausgerichtet sind und über eine die Spitze des Schneidzahns 10 bildende Hauptschneide 10b, die einen Radius bildet, miteinander verbunden sind. Die Nebenschneiden 10a schneiden die Gewindeflanken des Gewindes und die Hauptschneide 10b schneidet den Gewindegrund und die an den Gewindegrund angrenzenden Bereiche.

Die Schneidstege 8 verlaufen unter einem positiven Drallwinkel von größer als 0° um die Werkzeugdrehachse, d.h. in einer Stirnansicht des Gewindefräsers 1 winden sich die Schneidstege 8 im Uhrzeigersinn um die Werkzeugdrehachse. Während des Gewindefräsprozesses werden abgetragene Späne durch die ebenfalls unter einem positiven Drallwinkel von größer als 0° um die Werkzeugdrehachse verlaufenden Spannuten 6 in Richtung des Schafts 2 transportiert.

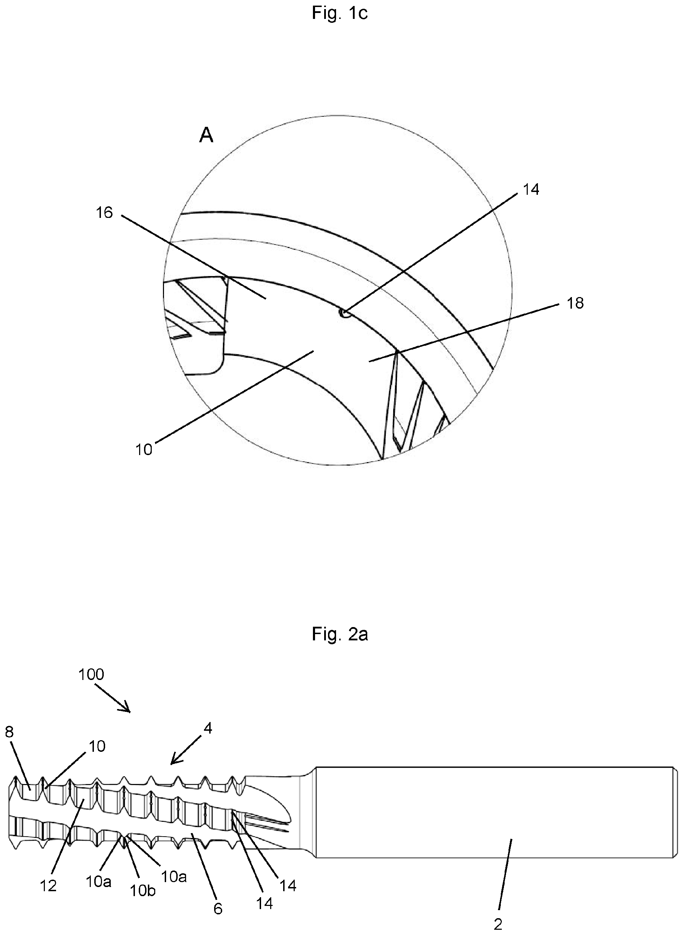

Einer der vier Schneidstege 8, der in Fig. 1c in einer Detailansicht A dargestellt ist, weist eine Nut 14 auf, die jeden Schneidzahn 10 des Schneidstegs 8 in einen ersten Zahnabschnitt 16 und einen zweiten Zahnabschnitt 18 unterteilt. Der erste Zahnabschnitt 16 und der zweite Zahnabschnitt 18 weisen in Umfangsrichtung gemessen unterschiedliche Längen auf. Die Nut 14 läuft axial auf gleicher Höhe mit den Spannuten 6 aus. Wie in Fig. 1c gezeigt, weist die Nut 14 einen halbrunden Querschnitt auf. Des Weiteren hat die Nut 14 eine radiale Tiefe, die maximal 10 % der Tiefe einer Spannut 6 und maximal 10 % der Höhe eines Schneidzahns 10 beträgt.

Jeder der vier Schneidstege 8 hat eine in Umfangsrichtung gemessene Breite, die jeweils über die gesamte axiale Länge des Schneidteils 4 gleichbleibt. Des Weiteren weist der Schneidsteg 8 mit der entlang des Schneidstegs 8 verlaufenden Nut 14 eine in Umfangsrichtung gemessene Breite auf, die größer ist als die in Umfangsrichtung gemessenen Breiten der Schneidstege 8 ohne Nut 14. Im Sinne einer Reduzierung von Vibrationen und Schwingungen des Gewindefräsers 1 ist die in Umfangsrichtung gemessene Breite des Schneidstegs 8 mit der wenigstens einen Nut 14 um den Betrag der in Umfangsrichtung gemessenen Breite der Nut 14 größer als die in Umfangsrichtung gemessene Breite eines Schneidstegs 8 ohne Nut 14.

Die entlang des Schneidstegs 8 verlaufende Nut 14 unterbricht den Verlauf des Zahnrückens und vergrößert den Abstand des Zahnrückens von der von der Hauptschneide 10b erzeugten Umfangsfläche bzw. der von der Hauptschneide 10b erzeugten Gewindeoberfläche. Die Nut 14 kann eine starke Reibung zwischen dem Zahnrücken und dem Werkstück, insbesondere dem der Hauptschneide 10b bearbeiteten Bereich des Werkstücks, vermindern und dadurch Vibrationen oder Schwingungen des Gewindefräsers 1 verringern. Die Nut 14 verbessert des Weiteren eine Verteilung von Kühlschmiermittel entlang des Schneidstegs 8, so dass insgesamt die Schmierung verbessert wird, wodurch Vibrationen vermindert und die Laufruhe des Gewindefräsers 1 erhöht werden kann. Fig. 1b zeigt die Mündung eines im Gewindefräser 1 auf der Werkzeugdrehachse verlaufenden Kühlschmiermittelkanals 24, über den Kühlschmiermittel an die Stirnseite des Gewindefräsers 1 geleitet wird. Des Weiteren kann zwischen der Nut 14 und der von der Hauptschneide 10b bearbeiteten Gewindeoberfläche ein Kühlschmiermittelpolster gebildet werden, das dazu beitragen kann, Vibrationen des Gewindefräsers 1 zu verringern. Insgesamt ist der Gewindefräser 1 durch die Nut 14 langlebig und weist eine hohe Standzeit auf.

### Zweite Ausführungsform

Fig. 2a zeigt einen rechtdrehenden Gewindefräser 100 mit einem zylindrischen Schaft 2 zum Einspannen in eine Werkzeugmaschine und einem Schneidteil 4. In den Figuren 2a bis 2c sind Merkmale, die dem Gewindefräser 1 der ersten Ausführungsform entsprechen mit denselben Bezugszeichen gekennzeichnet. Im Folgenden wird daher lediglich auf Unterschiede zur ersten Ausführungsform eingegangen.

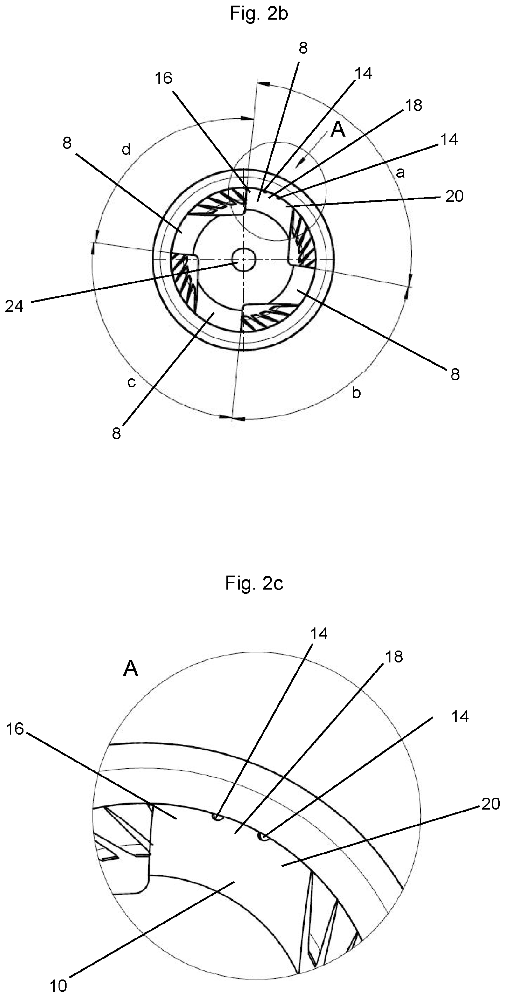

Im Gegensatz zur ersten Ausführungsform weist der Gewindefräser 100 der zweiten Ausführungsform auf einem seiner vier in Umfangsrichtung durch Spannuten 6 getrennten Schneidstege 8 zwei zueinander parallel verlaufende Nuten 14 auf. Wie insbesondere in Fig. 2b und 2c gezeigt ist, unterteilen die Nuten 14 die Schneidzähne 10 in einen ersten Zahnabschnitt 16, einen zweiten Zahnabschnitt 18 und einen dritten Zahnabschnitt 20. Die Zahnabschnitte 16 und 20 haben in Umfangsrichtung gemessen dieselbe Länge, während der zweite Zahnabschnitt 18 in Umfangsrichtung gemessen kürzer ist.

Jeder der vier Schneidstege 8 hat eine in Umfangsrichtung gemessene Breite, die jeweils über die gesamte axiale Länge des Schneidteils 4 gleichbleibt. Des Weiteren weist der Schneidsteg 8 mit den entlang des Schneidstegs 8 verlaufenden zwei Nuten 14 eine in Umfangsrichtung gemessene Breite auf, die größer ist als die in Umfangsrichtung gemessenen Breiten der Schneidstege 8 ohne Nut 14. Im Sinne einer Reduzierung von Vibrationen und Schwingungen des Gewindefräsers 100 ist die in Umfangsrichtung gemessene Breite des Schneidstegs 8 mit den zwei Nuten 14 um den Summenbetrag der in Umfangsrichtung gemessenen Breiten der Nuten 14 größer als die in Umfangsrichtung gemessene Breite eines Schneidstegs 8 ohne Nut 14.

### Dritte Ausführungsform

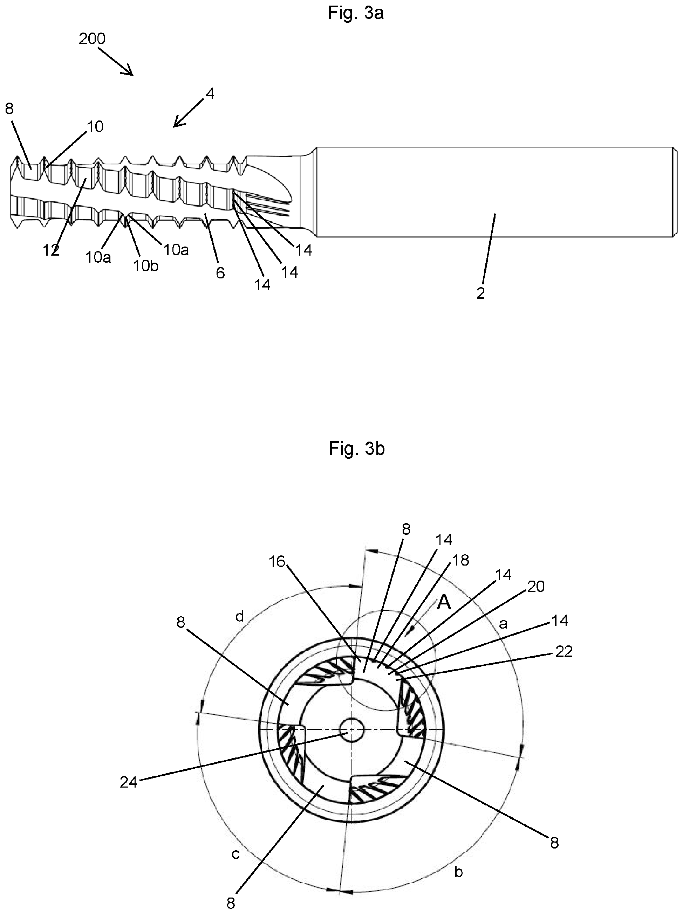

Fig. 3a zeigt einen rechtdrehenden Gewindefräser 200 mit einem zylindrischen Schaft 2 zum Einspannen in eine Werkzeugmaschine und einem Schneidteil 4. In den Figuren 3a bis 3c sind Merkmale, die dem Gewindefräser 1 der ersten Ausführungsform entsprechen mit denselben Bezugszeichen gekennzeichnet. Im Folgenden wird daher lediglich auf Unterschiede zur ersten Ausführungsform eingegangen.

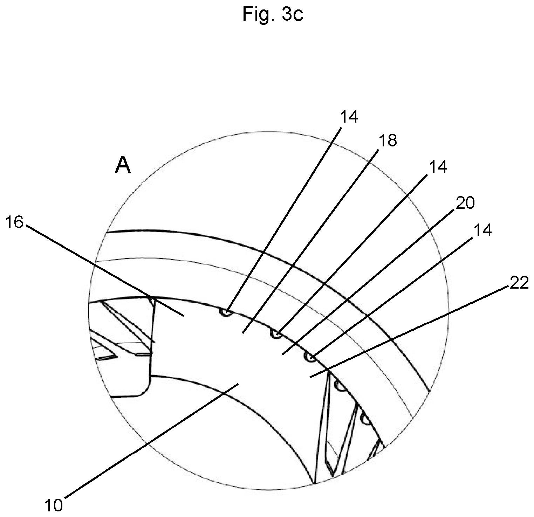

Im Gegensatz zur ersten Ausführungsform weist der Gewindefräser 200 der zweiten Ausführungsform auf einem seiner vier in Umfangsrichtung durch Spannuten 6 getrennten Schneidstege 8 drei zueinander parallel verlaufende Nuten 14 auf. Wie insbesondere in Fig. 3b und 3c gezeigt ist, unterteilen die Nuten 14 die Schneidzähne 10 in einen ersten Zahnabschnitt 16, einen zweiten Zahnabschnitt 18, einen dritten Zahnabschnitt 20 und einen vierten Zahnabschnitt 22. Die Zahnabschnitte 16, 18, 20 und 22 haben in Umfangsrichtung gemessen unterschiedliche Längen, wobei der zweite Zahnabschnitt 18 kürzer ist als der erste Zahnabschnitt 16, der dritte Zahnabschnitt 20 kürzer ist als der zweite Zahnabschnitt 18 und der vierte Zahnabschnitt 22 kürzer ist als der dritte Zahnabschnitt 20.

Jeder der vier Schneidstege 8 hat eine in Umfangsrichtung gemessene Breite, die jeweils über die gesamte axiale Länge des Schneidteils 4 gleichbleibt. Des Weiteren weist der Schneidsteg 8 mit den entlang des Schneidstegs 8 verlaufenden drei Nuten 14 eine in Umfangsrichtung gemessene Breite auf, die größer ist als die in Umfangsrichtung gemessenen Breiten der Schneidstege 8 ohne Nut 14. Im Sinne einer Reduzierung von Vibrationen und Schwingungen des Gewindefräsers 200 ist die in Umfangsrichtung gemessene Breite des Schneidstegs 8 mit den drei Nuten 14 um den Summenbetrag der in Umfangsrichtung gemessenen Breiten der Nuten 14 größer als die in Umfangsrichtung gemessene Breite eines Schneidstegs 8 ohne Nut 14.

### Allgemeine Bemerkungen

In allen oben beschriebenen Ausführungsformen weist jeweils nur einer der vier in Umfangsrichtung durch Spannuten 6 getrennten Schneidstege 8 eine Nut 14 oder zwei oder drei Nuten 14 auf, die die Schneidzähne 10 in Zahnabschnitte unterteilt/unterteilen. Alternativ dazu kann in jeder Ausführungsform jeder der vier in Umfangsrichtung durch Spannuten 6 getrennten Schneidstege 8 eine Nut 14 oder mehrere, beispielsweise zwei oder drei, Nuten 14 aufweisen, die die Schneidzähne 10 in Zahnabschnitte unterteilt/unterteilen.

Die durch die Nut 14 oder die Nuten 14 gebildeten zwei oder mehreren Zahnabschnitte können im Umfangsrichtung gemessen gleiche oder ungleiche Längen aufweisen. Im Falle mehrerer Nuten 14 können die in Umfangsrichtung gemessenen Längen der Zahnabschnitte, d.h. der Abstand zwischen den Nuten, entgegen der Werkzeugdrehrichtung kleiner werden.

### Bezugszeichenliste

- a, b, c, d: Teilungswinkel
- 1: Gewindefräser
- 2: Schaft
- 4: Schneidteil
- 6: Spannut
- 8: Schneidsteg
- 10: Schneidzahn
- 10a: Nebenschneide
- 10b: Hauptschneide
- 12: Stegnut
- 14: Nut
- 16: erster Zahnabschnitt
- 18: zweiter Zahnabschnitt
- 20: dritter Zahnabschnitt
- 22: vierter Zahnabschnitt
- 24: Kühlschmiermittelkanal

## Patentansprüche

1. Gewindefräser (1; 100; 200) mit einem Schaft (2) und einem Schneidteil (4), der mehrere in Umfangsrichtung durch Spannuten (6) voneinander getrennte Schneidstege (8) mit jeweils einer Vielzahl von Schneidzähnen (10) aufweist, **dadurch gekennzeichnet, dass**
wenigstens ein Schneidsteg (8) wenigstens eine entlang des Schneidstegs (8) verlaufende Nut (14) aufweist, die die Schneidzähne (10) in Zahnabschnitte (16, 18, 20, 22) unterteilt.

2. Gewindefräser (100; 200) nach Anspruch 1, **dadurch gekennzeichnet, dass** der wenigstens eine Schneidsteg (8) mehrere zueinander parallel verlaufende Nuten (14) aufweist.

3. Gewindefräser (1; 100; 200) nach Anspruch 1 oder 2, **dadurch gekennzeichnet, dass** die Zahnabschnitte jedes Schneidzahns, in Umfangsrichtung gemessen, gleiche Längen aufweisen.

4. Gewindefräser (1; 100; 200) nach Anspruch 1 oder 2, **dadurch gekennzeichnet, dass** die Zahnabschnitte (16, 18, 20, 22) jedes Schneidzahns (10), in Umfangsrichtung gemessen, unterschiedliche Längen aufweisen.

5. Gewindefräser (1; 100; 200) nach einem der vorhergehenden Ansprüche, **dadurch gekennzeichnet, dass** die wenigstens eine Nut (14) eine radiale Tiefe hat, die maximal 10 % der Tiefe einer Spannut (6) beträgt.

6. Gewindefräser (1; 100; 200) nach einem der vorhergehenden Ansprüche, **dadurch gekennzeichnet, dass** die wenigstens eine Nut (14) eine radiale Tiefe hat, die maximal 10 % der Höhe eines Schneidzahns (10) beträgt.

7. Gewindefräser (1; 100; 200) nach einem der vorhergehenden Ansprüche, **dadurch gekennzeichnet, dass** die wenigstens eine Nut (14) einen halbrunden Querschnitt hat.

8. Gewindefräser (1; 100; 200) nach einem der vorhergehenden Ansprüche, **dadurch gekennzeichnet, dass** die wenigstens eine Nut (14) axial auf gleicher Höhe mit den Spannuten (6) ausläuft.

9. Gewindefräser (1; 100; 200) nach einem der vorhergehenden Ansprüche, **dadurch gekennzeichnet, dass** die Schneidstege (8) mit ungleicher Winkelteilung um die Gewindefräserachse angeordnet sind.

10. Gewindefräser (1; 100; 200) nach einem der vorhergehenden Ansprüche, **dadurch gekennzeichnet, dass** die Schneidstege (8) einen Drallwinkel von größer als 0° aufweisen.

11. Gewindefräser (1; 100; 200) nach Anspruch 10, **dadurch gekennzeichnet, dass** sich die Drallwinkel von wenigstens zwei Schneidstegen (8) unterscheiden.

12. Gewindefräser (1; 100; 200) nach einem der vorhergehenden Ansprüche, **dadurch gekennzeichnet, dass** jeder Schneidsteg (8) wenigstens eine entlang des Schneidstegs verlaufende Nut (14) aufweist, die die Schneidzähne (10) in Zahnabschnitte unterteilt.

13. Gewindefräser (1; 100; 200) nach einem der vorhergehenden Ansprüche, **gekennzeichnet durch** einen, vorzugsweise auf der Werkzeugdrehachse verlaufenden, innenliegenden Kühlschmiermittelkanal (24).
